# EUROPÄISCHE PATENTSCHRIFT

(11) **EP 2 365 944 B1**
(45) Veröffentlichungstag und Bekanntmachung des Hinweises auf die Patenterteilung: **17.04.2013**
(21) Anmeldenummer: 09774664.8
(22) Anmeldetag: 09.12.2009
(51) Int. Cl.: C03B 5/033, C03B 5/167, C03B 5/43

(54) **SCHMELZTIEGEL FÜR DEN EINSATZ IN EINEM TIEGELZIEHVERFAHREN FÜR QUARZGLAS**
MELTING CRUCIBLE FOR USE IN A CRUCIBLE DRAWING METHOD FOR QUARTZ GLASS
CREUSET DE FUSION POUR L'UTILISATION DANS UN PROCÉDÉ D'ÉTIRAGE EN CREUSET POUR DU VERRE QUARTZEUX

(30) Priorität: 15.12.2008 DE 102008061871
(43) Veröffentlichungstag der Anmeldung: 21.09.2011
(73) Patentinhaber: Heraeus Quarzglas GmbH & Co. KG, 63450 Hanau (DE)
(72) Erfinder: FRANZ, Bernhard, 35398 Gießen (DE); WHIPPEY, Nigel, 63500 Seligenstadt (DE); BECKER, Joerg, 61194 Niddatal (DE); LEBER, Helmut, 63454 Hanau (DE)
(74) Vertreter: Staudt, Armin Walter
(86) Internationale Anmeldenummer: PCT/EP2009/066705
(87) Internationale Veröffentlichungsnummer: WO 2010/072566

(56) Entgegenhaltungen:
- EP-A2- 1 788 121
- US-A- 2 683 305
- US-A- 4 806 385
- US-B1- 6 739 155

## Beschreibung

Die vorliegende Erfindung betrifft einen Schmelztiegel für den Einsatz in einem Tiegelziehverfahren, der einen Tiegelinnenraum zur Aufnahme einer erweichten Quarzglasmasse aufweist, der von einer Wandung aus Wolfram, Molybdän, Niob oder Tantal oder einer hochtemperaturbeständigen Legierung dieser Metalle begrenzt ist, wobei die Wandung eine dem Tiegelinnenraum zugewandte Innenseite aufweist, welche mindestens teilweise mit einer Schutzschicht bedeckt ist.

### Stand der Technik

Schmelztiegel dieser Art werden in Tiegelziehverfahren für die Herstellung zylinderförmiger Bauteile aus Quarzglas mit beliebigem Querschnittsprofil eingesetzt. Ein derartiger Schmelztiegel ist aus der EP 1 160 208 A2 bekannt. Dem Schmelztiegel wird von oben kontinuierlich körniges SiO₂-Ausgasungsmaterial zugeführt und bei hoher Temperatur (> 2050 °C) unter reduzierend wirkendem Schutzgas (Wasserstoff) erweicht, so dass sich eine zähflüssige Quarzglasmasse ausbildet, die im unteren Bereich des Schmelztiegels über eine im Bodenbereich des Tiegels vorgesehene Ziehdüse nach unten in Form eines Quarzglasrohres abgezogen wird. Für die Zufuhr des teilchenförmigen Rohmaterials ist ein Schütttrichter vorgesehen, der in den Schmelztiegel hineinragt, und dessen unteres Ende oberhalb der Oberfläche der zähflüssigen Glasmasse (im Folgenden als "Schmelzoberfläche" bezeichnet) endet.

Die eingesetzten Schmelztiegel-Werkstoffe sind in der Regel Wolfram (W), Molybdän (Mo) oder Legierungen davon. Allerdings sind diese refraktären Metalle nicht vollkommen korrosionsbeständig und neigen bei hoher Temperatur zur Reaktion mit Sauerstoff oder anderen gasförmigen Reaktanten, wie etwa Chlorverbindungen, die aus Reinigungsprozessen des körnigen SiO₂-Rohmaterials in den Tiegelraum eingeschleppt werden können oder die als Zersetzungsprodukte aus dem Rohmaterial freigesetzt werden. Durch Reaktion mit dem Metall der Tiegelwandung bilden sich flüchtige Metallverbindungen, die von der Tiegelwandung entweichen und in der reduzierenden Schmelztiegel-Atmosphäre wieder zu feinteiligem Metall reduziert werden. Das Metall gelangt in die Quarzglasschmelze, oder es reichert sich vorwiegend an der Tiegelwandung und im Bodenbereich des Schmelztiegels an, von wo es von diskontinuierlich mit dem Schmelzfluss der Glasschmelze in konzentrierter Form abgezogen wird und sich - dann in Form nicht gelöster Metalloxidpartikel - in der Quarzglasschmelze als Schlieren oder Verfärbungen des Quarzglasstrangs bemerkbar macht und zu Ausschuss führen kann.

Schmelztiegel aus hochschmelzenden Metallen der Gruppe Iridium, Rhenium, Osmium und Ruthenium zeigen zwar eine wesentlich bessere Korrosionsbeständigkeit gegenüber der Quarzglasschmelze, sie sind jedoch sehr teuer. Als Alternative wurde vorgeschlagen, nur die Innenseite eines ansonsten aus Wolfram oder Molybdän bestehenden Schmelztiegels durch eine Schutzschicht aus Edelmetall vor dem korrosiven Angriff zu schützen. Schmelztiegel dieser Art sind beispielsweise aus der oben bereits genannten EP 1 160 208 A2 sowie aus der EP 1 355 861 B1 und aus der US 6,739,155 B1 bekannt. Dabei wird die Innenseite eines Wolfram-Tiegels mit einer Schutzschicht aus Iridium, Rhenium, Osmium oder Legierungen dieser Metalle versehen. Die Schutzschicht ist entweder mit der Tiegelwandung metallurgisch verbunden oder sie bildet ein separates Einsatzteil, das an der Tiegelwandung anliegt und an dieser mechanisch fixiert ist. Typische Dicken derartiger Schutzschichten liegen im Bereich von 0,5 mm bis 1,27 mm.

Aus der US 4,806,385 A ist eine Schutzschicht für ein Bauteil aus Molybdän bekannt, das hoher Temperatur unter korrosiven Bedingungen widersteht. Bei dem Molybdän-Bauteil handelt es sich beispielsweise um Elektroden für den Einsatz in Glasschmelzen. Die Schutzschicht wird lagenweise durch Plasmaspritzen eines Pulvergemisches aus Molybdän und Al₂O₃ erzeugt, wobei der Al₂O₃-Anteil von innen nach außen zunimmt.

### Technische Aufgabe

Die zuletzt beschriebenen Schmelztiegel weisen eine verbesserte Korrosionsbeständigkeit gegenüber Quarzglasschmelzen auf. Die Materialkosten für die Herstellung der Tiegel sind wegen der teuren Beschichtungsmetalle für die Herstellung der Schutzschicht jedoch sehr hoch.

Ausgehend von diesem Stand der Technik liegt der Erfindung die Aufgabe zugrunde, einen Schmelztiegel für den Einsatz in einem Tiegelziehverfahren für Quarzglas bereitzustellen, der bei geringeren Materialkosten eine gute Korrosionsbeständigkeit zeigt.

Diese Aufgabe wird ausgehend von einem Schmelztiegel der eingangs genannten Gattung erfindungsgemäß dadurch gelöst, dass die Schutzschicht aus einem gasdichten, oxidischen Werkstoff besteht, der im Temperaturbereich von 20 °C bis 1800 °C keiner Phasenumwandlung unterliegt, und dass der Tiegelinnenraum oberhalb der aufzunehmenden Quarzglasmasse einen Gasraum aufweist, und dass die Schutzschicht ausschließlich auf dem an den Gasraum angrenzenden Oberfläche der Schmelztiegel-Innenseite vorgesehen ist.

Die Tiegelwandung besteht im Wesentlichen aus einem hochtemperaturbeständigen Metall, wobei außer Wolfram auch Niob, Molybdän und Tantal in Betracht kommen. Zumindest die im Kontakt mit der heißen Gasatmosphäre stehende Innenwandung des Tiegels ist ganz oder teilweise mit einer möglichst dichten Schutzschicht versehen, die aus einem oxidischen Werkstoff besteht.

Die Schutzschicht vermindert die Einwirkung korrosiver Gase, insbesondere von Sauerstoff und chlorhaltigen Verbindungen, auf die Tiegel-Innenwandung und vermindert so den Eintrag von Tiegelmetall in die Quarzglasmasse. Im Vergleich zu den bekannten Schmelztiegeln mit Edelmetallauskleidung ist der zur Herstellung der verwendete Werkstoff jedoch oxidischer Natur und dadurch besonders kostengünstig.

Wichtig ist, dass die Schutzschicht beim Aufheizen oder während des Einsatzes des Schmelztiegels wenigstens im Gasraum oberhalb der Quarzglasmasse nicht abplatzt. Die Maximaltemperatur beim bestimmungsgemäßen Einsatz des Schmelztiegels liegt typischerweise im Bereich von 2000 °C und 2300°C, wobei der Gasraum oberhalb der erweichten Quarzglasmasse deutlich geringere Temperaturen um 500 °C aufweist. Die metallische Tiegelwandung kann sich jedoch auch im Bereich des Gasraums durch Wärmeleitung aufheizen, so dass nur solche Oxide zur Ausbildung der Schutzschicht geeignet sind, die bis zu einer Temperatur von etwa 1800 °C keiner Phasenumwandlung unterliegen, und demnach auch unterhalb dieser Temperatur nicht aufschmelzen.

Der Tiegelinnenraum weist oberhalb der aufzunehmenden Quarzglasmasse einen Gasraum auf, wobei die Schutzschicht ausschließlich auf der an den Gasraum angrenzenden Oberfläche der Schmelztiegel-Innenseite vorgesehen ist.

In der Regel ist bereits vor dem bestimmungsgemäßen Einsatz des Schmelztiegels die voraussichtliche Schmelzbadhöhe der erweichten Quarzglasmasse in etwa bekannt. Aus Gründen der Prozessstabilität wird die Schmelzbadhöhe auch während des Einsatzes bevorzugt in etwa konstant gehalten.

Die erweichte Quarzglasmasse kann die oxidische Schutzschicht auflösen. Eine Schutzschicht, die unterhalb des Schmelzspiegels endet, wird daher mit der Zeit abgetragen. Dabei gelangen die in der Schutzschicht enthaltenden Elemente und etwaige Verunreinigungen in die Quarzglasmasse. Dies ist in der Regel akzeptabel, solange die Auflösung der Schutzschicht während des Einfahrens des Ziehofens erfolgt und eine lange Einfahrdauer akzeptabel ist, also bei großen Chargen. Der Vorteil dieser Vorgehensweise ist, dass die danach verbleibende, nicht aufgelöste Schutzschicht ziemlich genau am Schmelzspiegel endet. Daher ist es unschädlich oder sogar bevorzugt, wenn die Schutzschicht von Anfang an so ausgelegt ist, dass sie in die Quarzglasmasse hineinragt.

Bei der erfindungsgemäßen Ausführungsform des Schmelztiegels is jedoch vorgesehen, dass die Schutzschicht von Anfang an, dass heißt, vor dem bestimmungsgemäßen Einsatz des Schmelztiegels, nur im Gasraum vorgesehen ist, und demnach mit der Quarzglasschmelze nicht in Berührung kommt.

Die Schutzschicht endet genau an der vorbestimmten Schmelzbadhöhe oder etwas darüber, wobei im erstgenannten Fall Schwankungen des Schmelzspiegels ein Auflösen der Schutzschicht über eine gewisse, wenn auch geringe Höhe bewirken können, und im zuletzt genannten Fall ein kleiner Flächenbereich mit nicht geschützter Tiegelwandung in Kauf genommen werden muss. Je kleiner dieser Flächenbereich gehalten werden kann, umso geringer ist der korrosive Angriff durch die Gasatmosphäre. Ein ungeschützter Flächenbereich mit einer Höhe um 2 cm ist in der Regel akzeptabel.

Ein weiterer Vorteil des erfindungsgemäßen Schmelztiegels ist darin zu sehen, dass nur ein verhältnismäßig kleiner Flächenbereich zu beschichten ist, nämlich derjenige Flächenbereich der Schmelztiegel-Innenseite, der mit der korrosiven Atmosphäre im Gasraum in Kontakt kommt. Daher ist vorzugsweise vorgesehen, dass die mit der Schutzschicht versehene Oberfläche weniger als 30 %, vorzugsweise weniger als 25 %, der gesamten Innenseiten-Oberfläche ausmacht.

Es hat sich als günstig erwiesen, wenn die Schutzschicht ein Oxid aus folgender Gruppe enthält: Aluminium, Magnesium, Yttrium, Zirkonium und Seltenerdmetalle.

Die Oxide oder Mischoxide dieser Metalle zeigen eine gute Haftung auf Tiegeloberflächen, insbesondere aus Wolfram. Unter dem Begriff "Seltene Erden" werden hier die Lanthaniden (einschließlich Lanthan) sowie Sc und Y zusammengefasst. Im Fall von Zirkoniumoxid wird stabilisiertes ZrO₂ bevorzugt, welches eine gewisse Menge an Y₂O₃ enthält.

Besonders bewährt hat sich dabei eine aus Al₂O₃ bestehende Schutzschicht.

Al₂O₃ ist Bestandteil von natürlich vorkommenden Quarzglasrohrstoffen und für die meisten Anwendungen des Quarzglases unschädlich. Dies gilt gleichermaßen für ZrO₂, das als Dotierstoff bis zu einem Gehalt von 0,7 Gew.-ppm für viele Anwendungen von Quarzglas akzeptabel und spezifiziert ist.

Das Dotieren mit Al₂O₃ bewirkt eine Erhöhung der Viskosität des Quarzglases, was sogar erwünscht sein kann. Daher ist eine gewisse Anreicherung der Quarzglasmasse mit dem aus der Schutzschicht eingetragenen Al₂O₃ in aller Regel unschädlich. Der thermische Ausdehnungskoeffizient von Aluminiumoxid liegt im Bereich von 5,5 bis 7 x 10⁻⁶ K⁻¹ und damit in der Größenordnung der thermischen Ausdehnungskoeffizienten von Wolfram (4,3 bis 4,7 x 10⁻⁶ K⁻¹) und Molybdän (5,3 x 10⁻⁶ K¹). Die ähnlichen thermischen Ausdehnungskoeffizienten tragen zu einer guten Haftung der Schicht an der Tiegelwandung bei.

In dem Zusammenhang hat es sich auch als günstig erwiesen, wenn die Schutzschicht eine mittlere Schichtdicke im Bereich von 50 µm bis 500 µm, besonders bevorzugt im Bereich von 100 µm und 200 µm aufweist.

Die Schutzschicht wirkt als Diffusionssperre für den Zutritt korrosiver Gase zur Wandung des Tiegelbasiskörpers. Die Funktion als Diffusionssperrschicht ist umso ausgeprägter, je dicker die Schutzschicht ist. Andererseits nimmt mit zunehmender Dicke der Schutzschicht auch die Gefahr von Abplatzungen aufgrund Unterschiede der thermischen Ausdehnungskoeffizienten von Schicht und Tiegelwandung zu. Im Hinblick hierauf haben sich Schichtdicken im Bereich von 50 bis 500 µm, insbesondere solche im Bereich von 100 bis 200 µm, als geeigneter Kompromiss erwiesen.

Die Schutzschicht ist vorzugsweise durch thermisches Spritzen erzeugt.

Beim thermischen Spritzen werden oxidische oder leicht oxidierbare metallische Ausgangspulverteilchen in Form einer fluiden Masse, wie etwa als fließfähiges Pulver, Sol oder Suspension (Dispersion) einem Energieträger zugeführt darin mindestens teilweise aufgeschmolzen und mit hoher Geschwindigkeit auf die zu beschichtende Tiegeloberfläche geschleudert. Der Energieträger ist in der Regel eine Brenngas-Sauerstoff-Flamme oder ein Plasmastrahl, kann aber auch als Lichtbogen, Laserstrahl oder dergleichen ausgebildet sein.

Besonders bevorzugt ist eine durch Plasmaspritzen erzeugte Schutzschicht.

Das hochenergetische Plasmaspritzverfahren ermöglicht einen vergleichsweise hohen Energieeintrag sowie eine hohe Geschwindigkeiten beim Aufschleudern der auf- oder angeschmolzenen Ausgangspulverteilchen auf die zu beschichtende Oberfläche. Dadurch lassen sich in kurzer Zeit verhältnismäßig dicke und fest haftende Schutzschichten erzeugen. Bei Anwesenheit von Sauerstoff in der Plasmaflamme können außerdem metallische Ausgangspulverteilchen eingesetzt werden, die in der Plasmaflamme oder während des Ablagerns auf der Oberfläche oxidiert werden. Dabei können besonders feine Partikel eingesetzt werden, was die Herstellung dünner Schutzschichten erleichtert.

### Ausführungsbeispiel

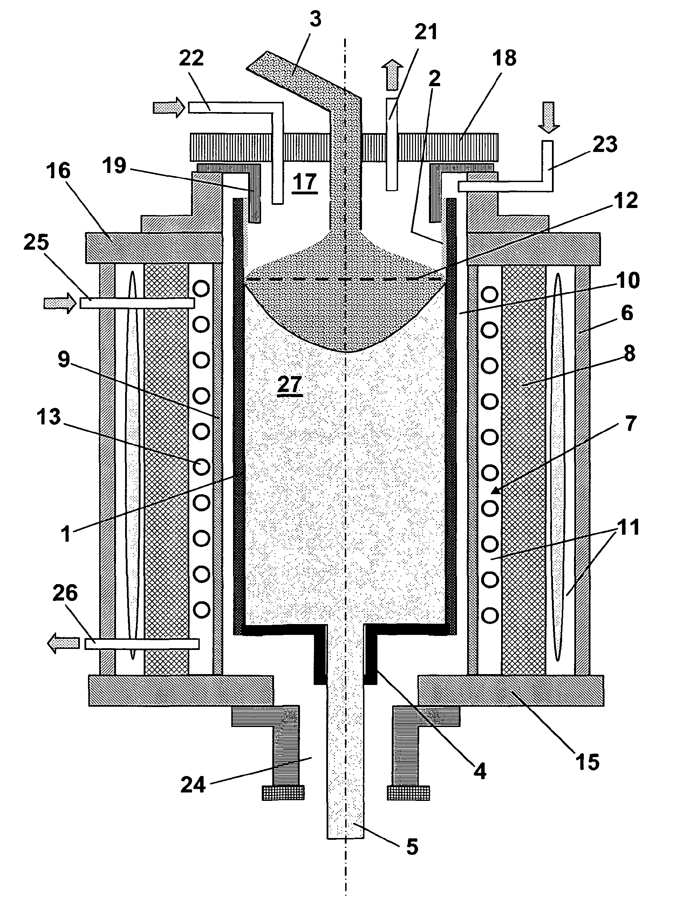

Nachfolgend wird die Erfindung anhand von Ausführungsbeispielen und einer Zeichnung näher erläutert. In der Zeichnung zeigt
- **Figur 1**: eine Ausführungsform des erfindungsgemäßen Schmelztiegels in einem Ziehofen zur Herstellung von Quarzglasrohren.

### Vorversuch

In einem Vorversuch wurden auf Platten aus Wolfram durch Vakuum-Plasmaspritzen (VPS-Verfahren) jeweils mit einer oxidischen Schutzschicht versehen. Dabei wurden die Beschichtungsparameter variiert. Als Ausgangssubstanz für die Schutzschichten wurden verschiedene oxidische Pulver mit einer Körnung im Bereich zwischen 10 und 100 µm eingesetzt.

Die so mit unterschiedlichen Schutzschichten versehenen W-Platten wurden anschließend auf eine Temperatur von 1800 °C aufgeheizt und bei dieser Temperatur 40 Tage lang in einer Atmosphäre aus Wasserstoff mit 1 Vol.-% HCl gehalten. Danach wurden die Platten abgekühlt und der Zustand der Schutzschichten und die Qualität der Grenzfläche zwischen Plattenkörper und dem jeweiligen Schichtwerkstoff anhand von Schliffbildern beurteilt. Die chemische Zusammensetzung, die mittlere Schichtdicke und andere qualitativ beurteilte Eigenschaften der oxidischen Schutzschichten sind aus Tabelle 1 ersichtlichen.

**Tabelle 1**

| **Versuch** | **Schutzschicht** | | |
|---|---|---|---|
| | **Zusammensetzung** | **Dicke [µm]** | **Ergebnis** |
| 1 | 100 % Al₂O₃ | 150 | gute Haftung, Schicht ist dicht; geringe Korrosion |
| 2 | 50% Al₂0₃ | 100 | akzeptable Haftung; Korrosion in geringem Umfang, |
| | 50% MgO | | |
| 3 | 100% Y₂O₃ | 150 | Gute Haftung; Schicht ist dicht; keine nennenswerte Korrosion |
| 4 | 100 % stabilisiertes ZrO₂ | 200 | Gute Haftung; Schicht ist dicht; Löcher an der Phasengrenze |

### Einsatz des erfindungsgemäßen Schmelztiegels in einem Ziehofen

Auf der Innenwandung eines Tiegelbasiskörpers aus Wolfram wurde die beim bestimmungsgemäßen Einsatz des Schmelztiegels zu erwartende Schmelzbadhöhe der weichen Quarzglasmasse durch eine umlaufende Linie markiert. Der Oberflächenbereich oberhalb dieser Linie ausmacht, wurde durch Vakuum-Plasmaspritzen (VPS-Verfahren) mit einer im Mittel 150 µm dicken Schutzschicht aus reinem Al₂O₃ beschichtet. Der so beschichtete Tiegel wurde in einen Ziehofen eingesetzt, wie er im Folgenden anhand Figur 1 näher beschrieben wird.

Der Ziehofen umfasst den Schmelztiegel 1 aus Wolfram, in den von oben über einen Zufuhrstutzen kontinuierlich SiO₂-Körnung 3 eingefüllt wird. Im Bodenbereich des Schmelztiegels 1 ist eine Ziehdüse 4 eingesetzt, durch die erweichte Quarzglasmasse 27 austritt und als Strang 5 abgezogen wird.

Der Schmelztiegel 1 ist von einem wassergekühlten Ofenmantel 6 unter Beibehaltung eines Ringspalts 7 umgeben, der durch eine Trennwand 9 aus Molybdän, die im Bereich ihrer beiden Stirnseiten gegenüber einer Bodenplatte 15 und einer Deckplatte 16 des Ofenmantels 6 abgedichtet ist, in einen innenliegenden Ringraum 10 und in einen außenliegenden Ringraum 11 aufgeteilt wird.

Innerhalb des außenliegenden Ringraums 11 ist eine poröse Isolationsschicht 8 aus oxidischem Isolationsmaterial untergebracht, und innerhalb des außenliegenden Ringraums 11 ist eine Widerstandsheizeinrichtung 13 zum Erhitzen des Schmelztiegels 1 vorgesehen.

Der Schmelztiegel 1 umschließt einen Gasraum 17 oberhalb der erweichten Quarzglasmasse 27, der ebenfalls gegenüber der Umgebung mittels einer Abdeckung 18 und einem Dichtelement 19 abgedichtet ist. Die Abdeckung 18 ist mit einem Einlass 21 und einem Auslass 22 für ein Tiegelinnenraum-Gas in Form von reinem Wasserstoff versehen.

Ebenso ist der innenliegende Ringraum 10 im oberen Bereich mit einem Gaseinlass 23 für reinen Wasserstoff versehen. Nach unten hin ist der innenliegende Ringraum 10 offen, so dass der Wasserstoff über die Bodenöffnung 24 des Ofenmantels 6 entweichen kann.

Der außenliegende Ringraum 11 weist im Bereich des oberen Endes einen Einlass 25 für ein Schutzgas in Form eines Stickstoff-Wasserstoffgemischs (5 Vol.-% H₂) auf und in seinem unteren Bereich einen Auslass 26 für das Schutzgas. Das Schutzgas durchströmt die poröse Isolationsschicht 8 und die umströmt die Außenwandung der Trennwand 9.

Der Gasraum 17 endet am "Schmelzspiegel" der Quarzglasmasse 27, der durch die gestrichelte Linie 12 angedeutet ist. Der an den Gasraum 17 angrenzende Oberflächenbereich der Schmelztiegel-Innenwandung, der etwa 20 % der gesamten Innenoberfläche des Schmelztiegels 1 ausmacht, ist fasst vollständig mit der Schutzschicht 2 aus Al₂O₃ versehen. Die Schutzschicht 2 erstreckt sich von einer Höhe von knapp oberhalb (ca. 2 cm) des Schmelzspiegels 12 bis unter das Dichtelement 19. Somit hat die Atmosphäre innerhalb des Gasraums 17 keinen oder allenfalls einen geringen Zugang zu freier Wolfram-Oberfläche.

## Patentansprüche

1. Schmelztiegel für den Einsatz in einem Tiegelziehverfahren, der einen Tiegelinnenraum (17) zur Aufnahme einer erweichten Quarzglasmasse (27) aufweist, der von einer Wandung (1) aus Wolfram, Molybdän, Niob oder Tantal oder einer hochtemperaturbeständigen Legierung dieser Metalle begrenzt ist, wobei die Wandung (1) eine dem Tiegelinnenraum (17) zugewandte Innenseite aufweist, welche mindestens teilweise mit einer Schutzschicht (2) bedeckt ist, **dadurch gekennzeichnet, dass** die Schutzschicht (2) aus einem gasdichten, oxidischen Werkstoff besteht, der im Temperaturbereich von 20 °C bis 1800 °C keiner Phasenumwandlung unterliegt, und dass der Tiegelinnenraum oberhalb der aufzunehmenden Quarzglasmasse (27) einen Gasraum (17) aufweist, und dass die Schutzschicht (2) ausschließlich auf dem an den Gasraum (17) angrenzenden Oberfläche der Schmelztiegel-Innenseite vorgesehen ist.

2. Schmelztiegel nach Anspruch 1, **dadurch gekennzeichnet, dass** die mit der Schutzschicht (2) versehene Oberfläche weniger als 30 %, vorzugsweise weniger als 25 %, der gesamten Innenseiten-Oberfläche ausmacht.

3. Schmelztiegel nach Anspruch 1 oder 2, **dadurch gekennzeichnet, dass** die Schutzschicht (2) ein Oxid aus folgender Gruppe enthält: Aluminium, Magnesium, Yttrium, Zirkonium und Seltenerdmetalle.

4. Schmelztiegel nach einem der vorhergehenden Ansprüche, **dadurch gekennzeichnet, dass** die Schutzschicht (2) aus Al₂O₃ besteht.

5. Schmelztiegel nach einem der vorhergehenden Ansprüche, **dadurch gekennzeichnet, dass** die Schutzschicht (2) eine mittlere Schichtdicke im Bereich von 50 µm bis 500 µm, besonders bevorzugt im Bereich von 100 µm und 200 µm aufweist.

6. Schmelztiegel nach einem der vorhergehenden Ansprüche, **dadurch gekennzeichnet, dass** die Schutzschicht (2) durch thermisches Spritzen, vorzugsweise durch Plasmaspritzen, erzeugt ist.

## Claims

1. A melting crucible for use in a crucible drawing method, comprising a wall defining a crucible interior (17) for receiving a softened quartz glass mass (27), said wall (1) being of tungsten, molybdenum, niobium or tantalum or a high temperature-resistant alloy of said metals, said wall (1) having an inward surface facing the crucible interior (17), which is covered at least in part with a protective layer (2), **characterized in that** the protective layer (2) consists of a gas-tight oxidic material that is not subject to phase conversion in a temperature range of 20°C to 1800°C, and that the crucible interior above a level of the quartz glass mass (27) to be received is a gas containing space (17), and the protective layer (2) is exclusively on the inward surface facing the gas containing space (17).

2. The melting crucible according to claim 1, **characterized in that** the surface provided with the protective layer (2) makes up less than 30%, preferably less than 25%, of the total inward surface.

3. The melting crucible according to claim 1 or 2, **characterized in that** the protective layer (2) contains an oxide selected from the following group: aluminum, magnesium, yttrium, zirconium, and rare-earth metals.

4. The melting crucible according to any one of the preceding claims, **characterized in that** the protective layer (2) is made of Al₂O₃.

5. The melting crucible according to any one of the preceding claims, **characterized in that** the protective layer (2) has a mean layer thickness in the range of 50 µm to 500 µm, particularly preferably in the range of 100 µm and 200 µm.

6. The melting crucible according to any one of the preceding claims, **characterized in that** the protective layer (2) is produced by thermal spraying, preferably by plasma spraying.

## Revendications

1. Creuset de fusion pour l'emploi dans un procédé d'étirage de creuset, qui présente une cavité de creuset (17) pour le logement d'une masse ramollie de verre de quartz (27) qui est délimitée par une paroi (1) en tungstène, molybdène, niobium ou tantale ou un alliage de ces métaux présentant une résistance aux températures élevées de ces métaux, la paroi (1) présentant une face interne tournée vers la cavité de creuset (17), qui est recouverte au moins partiellement d'une couche de protection (2), **caractérisé en ce que** la couche de protection (2) se compose d'un matériau oxyde étanche aux gaz qui ne subit aucune transformation de phase à une plage de température comprises entre 20°C et 1800°C et **en ce que** la cavité de creuset présente au-dessus de la masse de verre de quartz (27) à loger une chambre de gaz (17) et **en ce que** la couche de protection (2) est prévue exclusivement sur la surface de la face interne de creuset de fusion, attenant à la chambre de gaz (17).

2. Creuset de fusion selon la revendication 1, **caractérisé en ce que** la surface munie de la couche de protection (2) représente moins de 30 %, de préférence moins de 25 % de l'ensemble de la surface des faces internes.

3. Creuset de fusion selon la revendication 1 ou 2, **caractérisé en ce que** la couche de protection (2) contient un oxyde du groupe suivant: aluminium, magnésium, yttrium, zirconium et des métaux.

4. Creuset de fusion selon l'une des revendications précédentes, **caractérisé en ce que** la couche de protection (2) se compose d'Al₂O₃.

5. Creuset de fusion selon l'une des revendications précédentes, **caractérisé en ce que** la couche de protection (2) présente une épaisseur moyenne de couche comprise entre 50 µm et 500 µm, de préférence entre 100 µm et 200 µm.

6. Creuset de fusion selon l'une des revendications précédentes, **caractérisé en ce que** la couche de protection (2) est générée par injection thermique, de préférence par depot au plasma.
